Europäisches Patentamt

European Patent Office

Office européen des brevets

(11) Publication number: **0 303 737 B1**

## EUROPEAN PATENT SPECIFICATION

(45) Date of publication of patent specification: **04.03.92**   (51) Int. Cl.⁵: **H01M  2/12**, H01M 2/04, H01M 6/08

(21) Application number: **87118966.8**

(22) Date of filing: **21.12.87**

Divisional application 90101113.0 filed on 21/12/87.

The file contains technical information submitted after the application was filed and not included in this specification

(54) **Voltaic cell and method of making the cell.**

(30) Priority: **08.08.87 GB 8718838**

(43) Date of publication of application:
**22.02.89 Bulletin  89/08**

(45) Publication of the grant of the patent:
**04.03.92 Bulletin  92/10**

(84) Designated Contracting States:
**BE CH DE ES FR GB IT LI NL**

(56) References cited:
**FR-A- 1 324 524          FR-A- 2 328 296
FR-A- 2 341 207          US-A- 2 642 470
US-A- 3 623 915          US-A- 4 052 533**

(73) Proprietor: **British Ever Ready Limited
Ever Ready House 93 Burleigh Gardens
Southgate London N14 5AO(GB)**

(72) Inventor: **Watson, Ronald Frame
19 Linden Way Darras Hall
Ponteland Newcastle NE20 9DP(GB)**
Inventor: **Hill, David
141 Wansbeck Road
Jarrow Tyne & Wear NE32 5SR(GB)**
Inventor: **Raine, Geoffrey Alan
44 Harthorpe Close Rickleton
Washington Tyne & Wear NE10 9AZ(GB)**

(74) Representative: **Lewis, Samuel Hewitt et al
FORRESTER & BOEHMERT Widenmayer-
strasse 4/I
W-8000 München 22(DE)**

EP 0 303 737 B1

## Description

The present invention relates to a voltaic cell comprising a body of cathode mix, a first electrode, a container and a closure, wherein the container contains the body of cathode mix and incorporates a second electrode, an inner part of the first electrode is embedded in the cathode mix, the closure is arranged to prevent the escape of electrolyte from the container and to prevent ingress of oxygen into the container and wherein the closure defines an opening through which a part of the first electrode extends.

An example of a cell of the kind described has a first electrode in the form of a rod comprising particles of carbon bonded together, a second electrode in the form of a zinc can and a closure which is formed in situ of bitumen. The bitumen is poured, in a molten condition, onto a support which covers the body of cathode mix and is disposed inside the can. The bitumen adheres to the carbon rod and to the zinc can and forms an annular closure between these parts of the cell. Gas may be generated in cells of the kind described, for example upon mis-use of the cell. In a case where the closure is formed of bitumen, escape of gas from the interior of the cell is prevented unless the pressure inside the cell rises to a high value. A high internal pressure may rupture the zinc can or the closure or expel the carbon rod or expel a cap on the carbon rod from the cell. Some of these events may be dangerous and others may result in damage being caused to other equipment, for example equipment in which the cell is used.

A proposal for a pre-formed, thermoplastic closure having a weak part adjacent to the first electrode has been made in US 4,056,659A. However, the closure proposed therein has not, to the knowledge of the present applicants, been used in cells sold to the public. This is believed to be because the closure has failed to achieve a satisfactory compromise between the conflicting requirements of venting the cell in circumstances where venting is necessary to avoid the risk of a dangerous or potentially damaging internal pressure and maintaining the sealed condition of the cell in other circumstances for several years.

The flexible part of the closure shown in US 4,056,659A is of tubular form and includes a cylindrical portion which embraces the first electrode and a further, frusto-conical portion which diverges from the first electrode in a direction towards the interior of the cell. These portions have substantially the same form in the unstressed closure, but the diameter of the cylindrical portion is somewhat less than that of the first electrode.

According to a first aspect of the present invention, there is provided a voltaic cell according to the preamble of claim 1 in which the thickness of the flexible part of the closure is different at respective positions which are spaced by different distances from the first eletrode, in which that surface of the closure which defines the opening for receiving the first electrode is, when the closure is in an unstressed condition, frusto-conical and in which, in the assembled cell, that surface is substantially cylindrical and embraces the first electrode.

We have found that a closure having the foregoing characteristics enables a better compromise between the conflicting requirements of venting the cell in circumstances where venting is necessary to avoid the risk of dangerous or potentially damaging internal pressure and maintaining the cell in a sealed condition in other circumstances for several years is achieved than is achieved by the structure disclosed in US 4,056,659A. A cell in accordance with the first aspect of the invention has a relatively long interface between the closure and the first electrode and this contributes to the prevention of leakage of electrolyte at the interface.

In the preferred closure, the thickness of the flexible part is less than one half that dimension of the closure which extends away from the first electrode to the outer periphery of the closure.

The closure of a cell in accordance with the present invention yields resiliently when subjected to a sufficiently elevated pressure from inside the container, thereby venting the container to the atmosphere, and reseals the container automatically when the pressure inside the container falls. The closure is stressed in the completed cell, so that resilient deformation of the closure does not occur when the internal pressure rises slightly above atmospheric pressure but flexing of the closure to vent the container occurs whilst the pressure in the container is below a pressure at which the container itself would be ruptured or the first electrode would be expelled from the container. The closure can be arranged to vent the container repeatedly at a predetermined internal pressure, thereby ensuring that the internal pressure does not rise above that predetermined pressure.

Examples of cells embodying the present invention will now be described, with reference to the accompanying drawings, wherein:-

FIGURE 1 shows a part of a cross-section through a first cell; and

FIGURE 2 is a similar representation of a second cell.

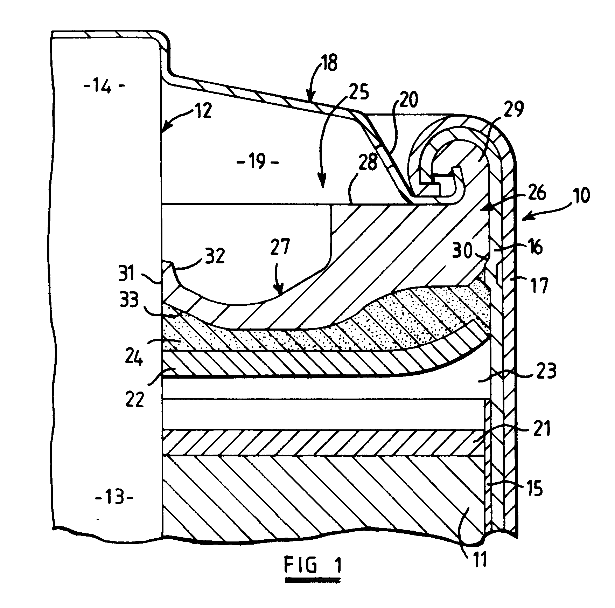

The cell illustrated in Figure 1 comprises a generally cylindrical container 10 containing a body of cathode mix 11 which occupies a major part of the space inside the container. The cell further comprises a first electrode 12 having the form of a cylindrical rod and being composed of particles of carbon bonded together. An inner part 13 of the first electrode is embedded in the body 11 of cathode mix. An outer part 14 of the first electrode protrudes from the body of cathode mix. The cathode mix typically comprises particles of carbon, particles of manganese dioxide, zinc chloride and/or ammonium chloride and sufficient water to moisten the mixture. That part of the container 10 which contains the body of cathode mix is lined by a separator 15 which may be a known treated paper.

The container 10 comprises inner and outer layers. The inner layer is in the form of a can 16 which is formed of zinc. The outer layer 17 has the form of a sleeve and is formed of an electrically insulating material, for example cardboard. A lower end of the sleeve may be closed by a metal plate which protects a lower, closed end of the zinc can in a known manner. That plate constitutes a terminal for electrical connection with the zinc can.

A cap 18 is fitted on the free-end of the outer part 14 of the carbon rod. The cap is formed of an electrically conductive material, for example steel which has been plated with tin and constitutes a terminal for electrical connection with the carbon rod. The cap is circular, as viewed along the carbon rod, and spans the interior of the container 10. Inside the cap 18, there is an airspace 19 which is in permanent communication with the ambient atmosphere through an aperture 20.

An annular retainer 21 rests on the body of cathode mix 11 and fits between the separator 15 and the carbon rod 12. The retainer may be formed of a fibrous, kraft material. An annular support 22 is disposed inside the container 10 and is spaced somewhat from the retainer 21 by an airspace 23. The support 22 fits between the zinc can 16 and the carbon rod 12. The outside diameter of the support 22, prior to insertion into the can, may be somewhat greater than the internal diameter of the zinc can so that the support is deformed somewhat into a saucer-shape during insertion of the support into the container, as illustrated in the drawing. The support 22 supports a layer 24 of bitumen which extends from the carbon rod 12 to the zinc can 16. This layer is formed in situ by introducing molten bitumen into the container.

The cell further comprises a pre-formed closure 25 which is formed of a resiliently flexible material. Suitable materials include low density polyethylene and other thermoplastics having a modulus of elasticity similar to that of low density polyethylene. When incorporated into the cell, the closure has a shape somewhat different from the shape of the closure as manufactured and in an unstressed condition. The closure is annular and lies between the carbon rod 12 and the zinc can 16. The closure is applied to the layer 24 of bitumen whilst the later is still at an elevated temperature, so that the bitumen flows to conform to the shape of the adjacent face of the closure.

The closure comprises a radially outer part 26 and a radially inner part 27 which is thinner than the outer part, as measured in a direction along the carbon rod 12. The outer part presents outwardly of the container a flat, annular surface 28 on which an annular part of the cap 18 rests. The outer part also includes an upwardly extending lip 29 which lies radially outwardly from the surface 28 and which curls over an upturned free-edge of the cap. At a position spaced along the can from the lip 29, the outer part 26 of the closure rests on an annular rib 30 formed in the side wall of the zinc can 16 and projecting radially inwardly. At the outside of the can, there is a corresponding annular groove.

Marginal portions of the zinc can 16 and sleeve 17 which are remote from the closed end of the can are curled radially inwardly over the lip 29 of the closure so that the marginal portion of the can holds the closure on the rib 30. The lip 29 is nipped between the upturned edge of the cap 18 and the curled over part of the can 16. This substantially eliminates the risk of electrolyte leaking from the container along the interface between the closure 25 and the zinc can 16.

The curled over part of the sleeve 17 is nipped between an edge of the zinc can 16 and an opposite face of the cap 18. This face of the cap which is opposite to the edge of the zinc can may face in a direction along the carbon rod 12 or face in a direction which is inclined to the length of the rod. Nipping of the end portion of the sleeve 17 between an edge of the zinc can and a face of the cap 18 substantially eliminates the risk of any electrolyte which may leak through the zinc can 16 escaping from the container along the interface between the zinc can and the sleeve 17. It also insulates the can electrically from the cap 18.

To further reduce the risk of electrolyte migrating along the interface between the zinc can 16 and the sleeve 17, the internal face of the sleeve may be coated with a composition which incorporates a gelling agent capable of gelling the electrolyte of the cathode mix. Thus, any electrolyte solution which penetrates the zinc can will be gelled and migration of the electrolyte along the interface will be inhibited. A suitable gelling agent is methyl cellulose, sold under the Trade Name "Celacol", which is applied in an aqueous condition to the sheet material of which the sleeve is formed and is dried.

When the closure is in an unstressed condition, the inner part 27 of the closure is generally flat at its underside, which will contact the layer 24 of bitumen, and extends radially inwardly from that surface of the outer part of the closure which is opposite the surface 28 of the closure. The inner part defines a central aperture 31 in which the carbon rod 12 is received. In the unstressed condition of the closure, the aperture 31 has a diameter which is substantially less than the diameter of the rod 12. The diameter of the aperture is within the range 60% to 90% of the diameter of the carbon rod and is preferably within the range 75% to 85% of the diameter of the carbon rod.

Immediately adjacent to the aperture 31, the inner part 27 of the closure is thickened somewhat by a lip 32 which is directed away from the layer 24 of bitumen. In the unstressed condition of the closure, the surface which, in the completed cell, bears against the rod 12, is of frusto-conical form and has its smaller diameter adjacent to the lip 32. This smaller diameter is stretched when the closure is applied to the carbon rod. The stretch is within the elastic limit of the closure.

In the unstressed condition of the closure, the surface 33 of the inner part of the closure which extends in the completed cell from the carbon rod towards the zinc can 16 and which is in contact with the layer 24 of bitumen, is substantially flat. In the completed cell, this surface is of frusto-conical form with its smaller diameter nearer to the cap 18 and its larger diameter nearer to the retainer 21. The surface 33 is inclined to a longitudinal axis of the carbon rod at an angle within the range of $50°$ to $80°$ and preferably within the range $60°$ to $70°$. In a region extending radially outwardly from the lip 32, an opposite surface of the inner part 27 is substantially parallel to the surface 33, the closure being of substantially uniform thickness in this region. Between this region and the outer part 26 of the closure, the thickness of the closure gradually increases.

The thinnest part of the closure 25 is that part which extends radially outwardly from the lip 32. The closure is thus formed to flex preferentially in a region adjacent to the carbon rod 12, when the closure is subjected to pressure from the interior of the container 10. In the event of the pressure inside the container rising, the layer of bitumen 24 deforms so that the pressure is transmitted to the closure. The outer part 26 of the closure is supported against movement along the zinc can 16 by the curled over marginal portion of the can, acting through the marginal portion of the sleeve 17 and the cap 18. Movement of the lip 32 away from the interior of the container is resisted only by stress in the closure itself. When the pressure inside the container attains a predetermined value, the inner part 27 of the closure is stretched sufficiently to permit leakage of bitumen and/or gas along the interface between the closure and the carbon rod 12 into the airspace 19. As the pressure within the container falls, stress in the closure causes the closure to contact the carbon rod once more under pressure and thereby reseal the container. It will be noted that venting does not permanently deform the closure 25. Accordingly, the container can be vented a number of times without the performance of the closure being significantly affected. The closure will still prevent uncontrolled leakage of electrolyte from the container and will still limit the internal pressure to the predetermined value. Accordingly, the risk of the zinc can being ruptured or of the closure being permanently displaced by internal pressure is substantially avoided.

The thickness of the closure increases gradually from the thinnest part of the closure in a direction away from the carbon rod 12 to the outer part 26. The flexibility of the closure decreases gradually from the thinnest part towards the outer part 26, which outer part is relatively inflexible. That portion of the radially inner part 27 which lies between the thinnest part and the outer part 26 constitutes a fairly stiff support for the thinnest part but has some flexibility, relative to the outer part.

The cell is assembled by inserting into a cylindrical zinc can the separator 15 and a disc at the base of the can. The cathode mix is inserted and the rib 30 is then rolled in the zinc can. The inner part 13 of the carbon rod is then forced into the cathode mix and the retainer 21 is forced onto the mix to consolidate the body of cathode mix around the carbon rod. The support 22 is then introduced into the zinc can, an appropriate quantity of hot bitumen is injected and there is applied a sub-assembly comprising the closure 25 and the cap 18. During application of this sub-assembly, the inner part 27 of the closure is stretched and deformed from a substantially flat configuration to the frusto-conical configuration illustrated in Figure 1. This stresses the closure and the stress is maintained in the finished cell.

As the sub-assembly is applied, any bitumen which is above the rib 30 is wiped down the internal surface of the zinc can by the closure 25.

After application of the sub-assembly, the sleeve 17 is applied to the outside of the zinc can with a coating of the gelling agent interposed between the sleeve and can. The end portions of the zinc can and of the sleeve are then rolled over the lip 29 of the closure and rolled down onto the cap 18.

The cell illustrated in Figure 1 is substantially symmetrical about the longitudinal axis of the rod 12 and the closure 25 is symmetrical about that axis in the finished cell and is symmetrical about its central axis, when unstressed. In the finished cell, the closure and the carbon rod together define an annular recess which surrounds the carbon rod and which has a mouth facing along the rod away from the cathode mix. The interface between the closure and the carbon rod extends axially of the rod, without interruption, for a distance exceeding one quarter of the diameter of the carbon rod around the entire circumference of the rod.

Where the inner part 27 of the closure joins the outer part 26 of the closure, the thickness of the inner part is preferably more than twice the thickness of the thinnest part of the closure and is typically three times the thickness of the thinnest part of the closure.

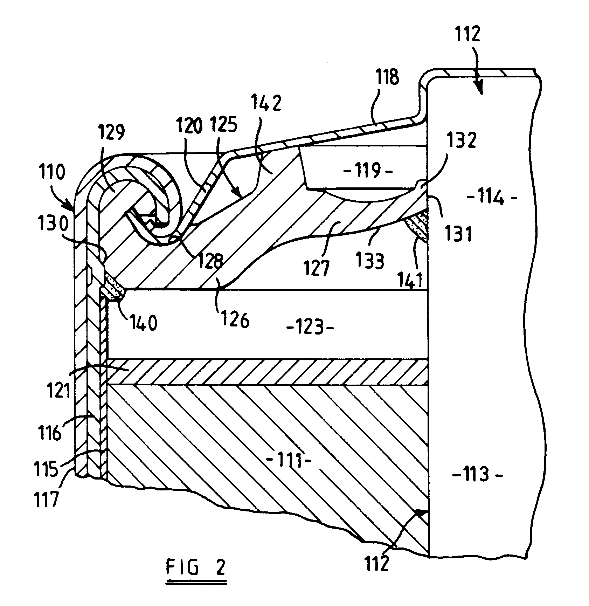

The cell illustrated in Figure 2 comprises parts which correspond to those hereinbefore described with reference to Figure 1. In Figure 2, such corresponding parts are identified by like reference numerals with the prefix 1 and the preceding description is deemed to apply, except for the differences hereinafter mentioned.

The cell illustrated in Figure 2 has no support corresponding to the support 22. Furthermore, there is no complete, annular layer of bitumen extending from the carbon rod 12 to the zinc can 116. An annular bead 140 of bitumen is applied to the internal surface of the zinc can. A further annular bead 141 of bitumen is applied to the circmferential surface of the carbon rod 112. When the sub-assembly comprising the closure 125 and the cap 118 is applied to the can and carbon rod, the bead 140 is wiped down the internal surface of the can to the rib 130 and the bead 141 is wiped down the external surface of the carbon rod to lie immediately beneath the closure.

The inner part 127 of the closure is spaced in a direction along the carbon rod 112 outwardly of the container 110 from that face of the outer part 126 of the closure which is nearest to the retainer 121. The closure is supported, in the vicinity of the junction between the inner and outer parts, against flexing in a direction outwardly of the container by an annular support 142 or an annular series of supports which extend from the outwardly facing surface of the closure into engagement with the underside of the cap 118. Accordingly, the closure is supported against flexing at a position adjacent to the zinc can 116 and at a position approximately half way between the zinc can and the carbon rod 112.

The inner part 127 of the closure is similar to the inner part 27 hereinbefore described with reference to Figure 1 and flexes in a similar way, when subjected to pressure from within the container. The inner part functions to vent the container and to reseal the container in a manner corresponding to that in which the inner part 27 functions.

The axially outwardly facing surface 128 presented by the outer part 126 of the closure shown in Figure 2, which surface receives the cap 118, is not flat, as is the surface 28 of the closure shown in Figure 1. In the arrangement of Figure 2, the cap is received in an annular groove defined by the closure and having a curved bottom. The marginal portion of the cap, which is the radially outermost part of the cap, projects from the groove in an axially and radially outwards direction. This marginal portion of the cap is surrounded by the closure and bites into the closure when the lip 129 is driven downwardly by turning over of the upper edge of the zinc can.

The cell of Figure 1 may be modified by adopting a cap having the shape of the cap 118 shown in Figure 2 and providing in the closure 25 to receive the cap a groove similar to that shown in Figure 2, in place of the flat, seating surface 28 shown in Figure 1. In each case, the cap and the closure are assembled together, prior to assembly of either of these components with further components of the cell.

In both the cell illustrated in Figure 1 and the cell illustrated in Figure 2, that part of the sleeve which is gripped in a space between an edge of the can and a surface of the closure may be engaged directly by the edge of the can or by a further element (not shown) interposed between the edge of the can and the gripped portion of the sleeve. Furthermore, whilst we prefer that a part of the cap should be interposed between the gripped part of the sleeve and the closure, it would be within the scope of the invention for the gripped part of the sleeve to be engaged directly by the closure.

It will be noted that, in both of the illustrated examples, there is an annular, closed space between the cap and the extremity of the lip on the closure. Any electrolyte which migrates along the interface between the zinc can and the sleeve in a direction away from the closed end of !he zinc can will emerge into this closed space.

## Claims

1. A voltaic cell comprising a body of cathode mix (11), an elongated first electrode (12), a container and a closure (25), wherein the container contains the body of cathode mix and incorporates a second electrode (16), an inner part (13) of the first electrode is embedded in the body of cathode mix, the closure is arranged to prevent escape of electrolyte from the container and defines an opening (31) through which the first electrode extends, the first electrode includes an outer part (14) lying at the side of the closure remote from the cathode mix and wherein the closure includes a thinner, flexible, stressed part (27) adjacent to the first electrode and a thicker, less flexible part (26) lying further from the first electrode than does the flexible part, whereby the closure will yield resiliently when subjected to an elevated pressure from inside the container, thereby venting the container to the atmosphere, and resealing the container automatically when the pressure inside the container falls, characterised in that the thickness of the flexible part (27) is different at respective positions which are spaced by different distances from the first electrode (12), in that a surface of the closure which defines said opening (31) is, when the closure is in an unstressed condition, frusto-conical and in that, in the assembled cell, said surface is substantially cylindrical and embraces the first electrode.

2. A cell according to Claim 1 wherein the minimum thickness of the flexible part (27) is within the range 10% - 50% of the maximum thickness of the flexible part.

3. A cell according to Claim 1 or Claim 2 wherein, in the unstressed condition of the closure, the diameter of the aperture (31) is within the range 60% - 90% of the diameter of the aperture in the assembled cell.

4. A cell according to any preceding Claim wherein the minimum thickness of the closure (25) occurs at a position spaced from the first electrode (12).

5. A cell according to any preceding claim wherein the flexible part (27) of the closure has a further surface (33) which, in the unstressed condition of the closure is relatively flat and, in the assembled cell, is approximately frusto-conical and faces towards the body (11) of cathode mix.

6. A cell according to any preceding Claim wherein the closure (25) is symmetrical about a central axis of the cell.

**Revendications**

1. Pile voltaïque comportant une masse de mélange formant cathode (11), une première électrode allongée (12), un boîtier et un couvercle (25), dans lequel le boîtier contient la masse de mélange formant cathode et comprend une seconde électrode (16), une première partie intérieure (13) de la première électrode est noyée dans la masse du mélange formant cathode, le couvercle est conçu de manière à empêcher la fuite de l'électrolyte hors du boîtier et définit une ouverture (31) à travers laquelle s'étend la première électrode, la première électrode comprend une partie extérieure (14) se trouvant sur le côté du couvercle distant du mélange formant cathode et dans lequel le couvercle comprend une partie plus mince flexible (27) et sous contrainte, adjacente à la première électrode et une partie plus épaisse et moins flexible (26) se trouvant plus loin de la première électrode que ne l'est la partie flexible, ce qui fait que le couvercle cède élastiquement lorsqu'il est soumis à une pression élevée en provenance de l'intérieur du boîtier, en mettant ainsi le boîtier en communication avec l'atmosphère et en refermant hermétiquement le boîtier automatiquement lorsque la pression à l'intérieur de ce boîtier tombe, caractérisée en ce que l'épaisseur de la partie flexible (27) est différente en des endroits respectifs qui sont espacés de distances différentes de la première électrode (12), en ce qu'une surface du couvercle définissant ladite ouverture (31) est tronconique lorsque le couvercle se trouve dans un état exempt de contrainte et en ce que, dans la pile assemblée, ladite surface est sensiblement cylindrique et enserre la première électrode.

2. Pile selon la revendication 1, dans laquelle l'épaisseur minimale de la partie flexible (27) est comprise entre 10 % et 50 % de l'épaisseur maximale de la partie flexible.

3. Pile selon la revendication 1 ou 2, dans laquelle, dans l'état exempt de contrainte du couvercle, le diamètre de l'ouverture (31) est compris entre 60 % et 90 % du diamètre de l'ouverture de la pile assemblée.

4. Pile selon l'une quelconque des revendications précédentes, dans laquelle l'épaisseur minimale du couvercle (25) se situe à un endroit espacé de la première électrode (12).

5. Pile selon l'une quelconque des revendications précédentes, dans laquelle la partie flexible (27) du couvercle comporte une autre surface (33) qui, dans l'état exempt de contrainte du couvercle, est relativement plate et qui, dans la pile assemblée, est à peu près tronconique et est orientée vers la masse (11) de mélange formant cathode.

6. Pile selon l'une quelconque des revendications précédentes, dans laquelle le couvercle (25) est symétrique par rapport à l'axe de la pile.

**Patentansprüche**

1. Voltasche Zelle, mit einem Körper einer Kathodenmischung (11), einer langgestreckten ersten Elektrode (12), einem Behälter und einem Verschluß (25), wobei der Behälter den Körper der Kathodenmischung enthält und eine zweite Elektrode (16) umfaßt, wobei ein innerer Teil (13) der ersten Elektrode in den Körper der Kathodenmischung eingebettet ist, wobei der Verschluß so angeordnet ist, daß er dem Entweichen von Elektrolyt aus dem Behälter vorbeugt und eine Öffnung (31) definiert, durch welche sich die erste Elektrode erstreckt, wobei die erste Elektrode einen äußeren Teil (14) umfaßt, der an der Seite des Verschlusses liegt, der von der Kathodenmischung entfernt ist, und wobei der Verschluß einen dünneren, flexiblen, gespannten Teil (27) benachbart der ersten Elektrode und einen dickeren, weniger flexiblen Teil (26), der weiter von der ersten Elektrode entfernt liegt als der flexible Teil, umfaßt, so daß der Verschluß federnd liegt, wenn er einem erhöhten Druck innerhalb des Behälters ausgesetzt ist, so daß der Behälter zur Atmosphäre hin belüftet wird und der Behälter automatisch versiegelt wird, wenn der Druck innerhalb des Behälters fällt, dadurch **gekennzeichnet,** daß die Dicke des flexiblen Teils (27) unterschiedlich an jeweiligen Stellen ist, die um verschiedene Abstände von der ersten Elektrode (12) beabstandet sind, daß eine Oberfläche des Verschlusses, der die Öffnung (31) definiert, wenn der Verschluß in einem ungespannten Zustand ist, kegelstumpfförmig ist, und daß in der zusammengebauten Zelle die Oberfläche im wesentlichen zylindrisch ist und die erste Elektrode umgibt.

2. Zelle nach Anspruch 1, bei der die minimale Dicke des flexiblen Teils (27) in dem Bereich von 10% - 50% der maximalen Dicke des flexiblen Teiles ist.

3. Zellen nach Anspruch 1 oder Anspruch 2, bei der, im ungespannten Zustand des Verschlusses, der Durchmesser der Öffnung (31) im Bereich von 60% - 90% des Durchmessers der Öffnung in der zusammengebauten Zelle ist.

4. Zellen nach einem der vorangehenden Ansprüche, bei der die minimale Dicke des Verschlusses (25) an einer Stelle auftritt, die von der ersten Elektrode (12) entfernt liegt.

5. Zelle nach einem der vorangehenden Ansprüche, bei der der flexible Teil (27) des Verschlusses eine weitere Fläche (33) aufweist, welche, in dem ungespannten Zustand des Verschlusses, relativ flach ist und, bei der zusammengesetzten Zelle, näherungsweise kegelstumpfförmig ist und gegen den Körper (11) der Kathodenmischung gerichtet ist.

6. Zelle nach einem der vorangehenden Ansprüche, bei der der Verschluß (25) symmetrisch um eine Mittelachse der Zelle ist.

FIG 1

FIG 2